(19) Europäisches Patentamt
European Patent Office
Office européen des brevets

(11) EP 3 995 523 A1

(12) EUROPEAN PATENT APPLICATION
published in accordance with Art. 153(4) EPC

(43) Date of publication:
**11.05.2022 Bulletin 2022/19**

(21) Application number: **20835167.6**

(22) Date of filing: **26.06.2020**

(51) International Patent Classification (IPC):
***C08G 59/50*** *(2006.01)* ***C08G 18/32*** *(2006.01)*
***C08G 18/80*** *(2006.01)*

(52) Cooperative Patent Classification (CPC):
**C08G 18/32; C08G 18/80; C08G 59/50**

(86) International application number:
**PCT/JP2020/025343**

(87) International publication number:
**WO 2021/002301 (07.01.2021 Gazette 2021/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.07.2019 JP 2019123924**

(71) Applicant: **Sunstar Engineering Inc.**
**Osaka 569-1134 (JP)**

(72) Inventors:
- **NISHIDA, Takatomi**
  **Takatsuki-shi, Osaka 569-1134 (JP)**
- **HANASAKI, Kazuaki**
  **Takatsuki-shi, Osaka 569-1134 (JP)**
- **MINAMIHORI, Takashi**
  **Takatsuki-shi, Osaka 569-1134 (JP)**

(74) Representative: **TBK**
**Bavariaring 4-6**
**80336 München (DE)**

# (54) LOW-TEMPERATURE CURABLE COMPOSITION

(57) Disclosed is a low-temperature curable composition comprising: (A) at least one curable component selected from an epoxy resin and a blocked isocyanate, and (B) an amine-based latent curing agent, wherein a temperature peak of a reaction of the amine-based latent curing agent (B) with a bisphenol A type epoxy resin is between 70°C and 110°C.

## Description

[Technical Field]

The present invention relates to a low-temperature curable composition, and more particularly to a low-temperature curable composition which is used in, for example, a vehicle body process of assembling pressed steel plates by welding to make a white body, painting and baking processes of the white body and the like in automobile manufacturing.

[Background Art]

Various curable compositions are used to produce automobiles. For example, in the vehicle body process of assembling pressed steel plates by welding to make a white body, a one-component thermosetting epoxy resin is used to impart the rigidity to hem flanges such as doors and hoods and to prevent corrosion (see, for example, PTLs 1 and 2). Further, for example, in the painting and baking processes of the vehicle body, plastisols are used for sealing and rust prevention of vehicle body joints (see, for example, PTLs 3 and 4).

In order to reduce the weight of automobiles, the resinification of the vehicle body is being progressed. In the current automobile manufacturing process, resin (or plastic) parts and steel plate bodies are made separately, painted, baked and then assembled together.

Generally, the curable composition used in the vehicle body process is also finally cured in the subsequent painting and baking processes. Therefore, in order to cure the curable composition below the heat-resistant temperature of the resin parts, the curable composition used in the vehicle body process, painting process and baking process are required to have an appropriate usable time (pot life or storage stability) while lowering the curing temperature.

PTL 1 discloses that an adhesive composition comprising a urethane-modified epoxy resin, dicyandiamide, a curing accelerator containing at least an imidazole system, and a carboxylic acid-modified powdered rubber cures at 130°C for 20 minutes (see PTL 1, [0061], [0063], [0066] to [0069], etc.).

PTL 2 discloses that a curing composition comprising an epoxy resin, a urea-based curing accelerator and an amine-based curing agent having a pyrazine ring is excellent in storage stability while curing at 130°C for 10 minutes (see PTL 2, [0030] to [0033], [0037] to [0040], etc.)

PTL 3 proposes a polyvinyl chloride plastisol composition comprising a vinyl chloride resin, a plasticizer, a filler and the like as main components, and a blocked isocyanate and a powder amine, which is used for an undercoat of a steel plate body. The undercoat is applied to a steel plate body and used as a chipping-resistant and vibration-damping-resistant coating film, but a specific baking temperature is not mentioned (see PTL 3 [0062] to [0063], [0066]).

PTL 4 discloses, as a low-temperature curable body sealer, an acrylic sol composition, which comprises a plasticizer containing an acrylic resin and a filler dispersed therein, and a blocked urethane prepolymer and a polyamine-based latent curing agent, is excellent in storage stability while curing at 100°C for 10 minutes (see PTL 4, pages 8 to 10).

[Citation List]

[Patent Literature]

[PTL1] WO 2013/069368
[PTL2] WO 2019/039230
[PTL3] JP 2014-210900 A
[PTL4] WO 01/088011

[Summary of Invention]

[Technical Problem]

In order to further improve the efficiency of the automobile manufacturing process and further reduce the energy consumption, it is required to simultaneously paint the resin parts and the steel plate body. In the resin part-steel plate simultaneous painting process, the resin parts and the steel plate body are simultaneously painted and baked. At that time, in order to prevent thermal deformation of the resin parts, the baking temperature is limited to a lower temperature, specifically 90 to 120°C.

In the automobile manufacturing process, a curing furnace during painting and baking is set, and the temperature

is set at an appropriate temperature according to the appropriate curing of the composition. However, since a temperature difference occurs depending on the portion of the automobile body, it is necessary to exhibit sufficient curing performance even at the lowest applicable temperature setting. Therefore, the curability at a temperature lower than the set temperature of the furnace may be required.

For example, as in PTLs 1 to 3 mentioned above, when curing is performed at 130°C to 160°C, a baking furnace having a relatively high temperature can be used, but it may be required to further lower the curing temperature by substantially 10 to 40°C. That is, for example, curability at 120°C may be required.

For example, as in PTL 4 mentioned above, when curing is performed at 100°C, a baking furnace having a relatively low temperature can be used, but it may be required to further lower the curing temperature by substantially 10 to 20°C. That is, the curability at, for example, 90°C may be required.

Therefore, for example, there is a demand for a method for commonly exhibiting (imparting) low-temperature curability at a temperature which is lower by about 10 to 400°C for a curable composition to be used in automobile manufacturing.

An object of the present invention is to provide, for example, a method for (preferably, commonly) exhibiting (imparting) low temperature curability at a temperature which is lower by about 10 to 40°C for a curable composition used in automobile manufacturing, and a new curable composition which can be used in the method. It is another object of the present invention to provide a new curable composition capable of exhibiting cured physical properties and adhesion at a lower baking temperature range (specifically, 90 to 120°C) by the low-temperature curable composition.

[Solution to Problem]

As a result of intensive study, the present inventors have found that it is possible for a low-temperature curable composition, which comprises: (A) at least one specific curable component selected from an epoxy resin and a blocked isocyanate, and (B) a specific latent curing agent including an amine-based latent curing agent in which a temperature peak of a reaction with a bisphenol A type epoxy resin is between 70°C and 110°C, to be capable of (preferably, commonly) exhibiting low-temperature curability at a temperature which is lower by about 10 to 40°C and having appropriate usable time (pot life or storage stability). Furthermore, it has been found that the curable composition, which exhibited lowertemperature curability, is capable of exhibiting cured physical properties and adhesion in a lower temperature range (specifically, 90 to 120°C). Furthermore, it has been found that the curable composition is suitable for automobile manufacturing applications, and thus the present invention has been completed.

The present description includes the following embodiments.

1. A low-temperature curable composition comprising:

    (A) at least one curable component selected from an epoxy resin and a blocked isocyanate, and
    (B) an amine-based latent curing agent, wherein
    a temperature peak of a reaction of the amine-based latent curing agent (B) with a bisphenol A type epoxy resin is between 70°C and 110°C.

2. The low-temperature curable composition according to aforementioned 1, wherein the amine-based latent curing agent (B) has an average particle size of 0.1 to 20 μm and a melting point of 65 to 140°C, and comprises a bisphenol skeleton.
3. The low-temperature curable composition according to aforementioned 1 or 2, wherein the amine-based latent curing agent (B) has at least one selected from a pyrazine ring, an adamantane ring and an indole ring.
4. The low-temperature curable composition according to any one of aforementioned 1 to 3, wherein the component (A) is composed of one or more types, and at least one type thereof has a polyoxyalkylene structure.
5. The low-temperature curable composition according to any one of aforementioned 1 to 4, wherein the blocked isocyanate of the component (A) comprises an aliphatic blocked isocyanate, and the blocking agent comprises an oxime-based blocking agent or an amine-based blocking agent.
6. The low-temperature curable composition according to any one of aforementioned 1 to 4, wherein the blocked isocyanate of the component (A) comprises an aromatic blocked isocyanate, and the blocking agent comprises a phenol-based blocking agent.
7. The low-temperature curable composition according to any one of aforementioned 1 to 6, comprising (C) at least one thermoplastic resin selected from a polyvinyl chloride-based homopolymer, a vinyl chloride-vinyl acetate-based copolymer and/or an acrylic resin.
8. The low-temperature curable composition according to any one of aforementioned 1 to 7, comprising (D) a plasticizer.
9. The low-temperature curable composition according to any one of aforementioned 1 to 8, which is used for

manufacturing an automobile.

10. A method for lowering a curing temperature of a curable composition, which comprises using the low-temperature curable composition according to any one of aforementioned 1 to 9.

11. A method for manufacturing an automobile, which comprises using the low-temperature curable composition according to any one of aforementioned 1 to 9.

[Advantageous Effects of Invention]

It has been found that, since the curable composition according to the embodiment of the present invention includes a specific curable component (A) and a specific latent curing agent (B), it is possible to (preferably, commonly) exhibit low-temperature curability at any temperature which is lower by about 10 to 40°C and to have appropriate usable time (pot life or storage stability). Furthermore, the curable composition, which exhibited lowertemperature curability, is capable of exhibiting cured physical properties and adhesion at a lower baking temperature (specifically, 90 to 120°C). Therefore, the curable composition according to the embodiment of the present invention can be suitably used for more efficiently manufacturing an automobile with lower energy.

[Description of Embodiments]

The present invention provides, in an aspect, a new curable composition, which comprises:

(A) at least one curable component selected from an epoxy resin and a blocked isocyanate, and
(B) an amine-based latent curing agent, wherein
a temperature peak of a reaction of the amine-based latent curing agent (B) with a bisphenol A type epoxy resin is between 70°C and 110°C.

The curable composition according to the embodiment of the present invention includes (or comprises) (A) at least one curable component selected from an epoxy resin and a blocked isocyanate. As used herein, the term "curable component" refers to at least one component selected from an epoxy resin and a blocked isocyanate, and is not particularly limited as long as the objective curable composition of the present invention can be obtained.

As used herein, the term "epoxy resin" refers to a compound having two or more epoxy groups in the molecule, which is generally called an epoxy resin, and is not particularly limited as long as the curable composition of the present invention can be obtained. Examples of the epoxy resin include (or compreise) a glycidyl ether type epoxy resin, a glycidyl amine type epoxy resin, a glycidyl ester type epoxy resin and the like.

Examples of the epoxy resin included in the curable composition according to the embodiment of the present invention further include (or comprise):

bisphenol type epoxy resins such as bisphenol A, bisphenol F, brominated bisphenol A, diglycidyl ether of bisphenol AD, and diglycidyl ether of an alkylene oxide adduct of bisphenol A;
diglycidyl ether type epoxy resins having one aromatic ring, such as catechol, resorcinol, and hydroquinone;
diglycidyl ester type epoxy resins based on dimer acid, phthalic acid and hydrogenated phthalic acid;
polyfunctional novolac type epoxy resins in which bisphenol A and bisphenol F are multinucleated;
acrylonitrile-butadiene copolymer-modified epoxy resins produced by blending a carboxyl-terminated butadiene-acrylonitrile copolymer rubber and a bisphenol type epoxy resin in a mass ratio of 1:5 to 4:1, and preferably 1:3 to 3:2, followed by a reaction at a temperature of 80 to 180°C;
alkylene oxide-modified glycidyl ether type epoxy resins obtained by reacting a polyhydroxy compound [for example, polyalkylene glycol (polyethylene glycol, polypropylene glycol, polyethylene propylene glycol, etc.); an aliphatic polyhydric hydroxy compound such as hexylene glycol, butylene glycol, propylene glycol, ethylene glycol, neopentyl glycol, triethylene glycol, pentandiol, hexanetriol or glycerol] with epihalohydrin; and
urethane-modified epoxy resins obtained by reacting a polyurethane prepolymer, which is prepared by adding polyisocyanate to the end of a polyalkylene glycol, with a hydroxyl group of an epoxy resin (mixing ratio is 10:90 to 50:50) and acrylic-modified epoxy resins obtained by reacting a carboxyl group on the surface of acrylic rubber particles with an epoxy resin (mixing ratio is 10:90 to 50:50).

Commercially available products can be used as the epoxy resin. Examples of those commercially available products include "JER (registered trademark) 828" manufactured by Mitsubishi Chemical Corporation, "ADEKA RESIN EPR-4023", "ADEKA GLYCIROL ED-506" and "ADEKA RESIN EPU-73b" manufactured by ADEKA CORPORATION, "Kane Ace MX-257 "manufactured by KANEKA CORPORATION and the like. Epoxy resins can be used alone or in combination.

As used herein, the term "blocked isocyanate" refers to, for example, a compound in which an NCO group at the end of a relatively low molecular weight polyisocyanate component is blocked with a blocking agent, for example, phenol, acid amide, lactam, lower monohydric alcohol, cellosolve, amine, caprolactam, or oximes such as methyl ethyl ketone oxime (MEKO).

The blocking agent means a compound containing active hydrogen which binds to an isocyanate group of polyisocyanate and is stable at room temperature, but can be dissociated from the isocyanate group when heated to a certain temperature or higher, and it is not particularly limited as long as the objective curable composition of the present invention can be obtained. In the embodiment of the present invention, phenols, oximes, amines and the like are preferable as the blocking agent because they are required to be dissociated at a relatively low temperature.

Examples of the polyisocyanate component include aliphatic isocyanates such as hexamethylene diisocyanate (HDI); aromatic isocyanates such as diphenylmethane diisocyanate (MDI), tolylene diisocyanate (TDI), metaphenylene diisocyanate, naphthylene diisocyanate and triphenylmethane triisocyanate; alicyclic diisocyanates such as isophorone diisocyanates and hydrogenated MDI; burette and isocyanurate compounds of these isocyanates, adducts with polyhydric alcohols such as ethylene glycol and trimethylolpropane, urethane prepolymers, and the like.

The blocked isocyanate can include a blocked urethane prepolymer in which a urethane prepolymer is blocked (so-called blocked type urethane resin). In the blocked type urethane resin, when the blocking agent is dissociated by heating, a crosslinking reaction occurs due to intermolecular crosslinking of the urethane resin, and the urethane resin can take a network structure by the crosslinking reaction.

It is possible to use, as the blocked type urethane resin, for example, a blocked type urethane resin obtained by blocking a urethane resin, which is obtained by reacting polyols such as polyether polyol and polyester polyol with isocyanates such as diphenylmethane diisocyanate (MDI), tolylene diisocyanate (TDI) and hexamethylene diisocyanate (HDI) by using the blocking agents mentioned above. It is preferable to use a urethane resin synthesized from polypropylene glycol (PPG) and tolylene diisocyanate (TDI) or diphenylmethane diisocyanate (MDI).

The curable composition according to the embodiment of the present invention includes (B) an amine-based latent curing agent. As used herein, the term "(B) amine-based latent curing agent" is an amine-based compound in which a temperature peak of a reaction with a bisphenol A type epoxy resin is between 70°C and 110°C and functions as a curing agent, and is not particularly limited as long as the objective curable composition of the present invention can be obtained.

Here, the phrase "temperature peak of a reaction with a bisphenol A type epoxy resin is between 70°C and 110°C" more specifically means the fact that the peak of the reaction temperature, which is obtained by raising the temperature from room temperature to 200°C at a rate of 5°C/min using Q2000 manufactured by TA Instruments Japan Inc. while reacting a bisphenol A type epoxy resin (JER828 manufactured by Mitsubishi Chemical Corporation) and (B) an amine type latent curing agent at a ratio of bisphenol A type epoxy resin/(B) amine-based latent curing agent (100/6, mass ratio), is between 70°C and 110°C. Details of the measurement method were mentioned in Examples.

The peak of the reaction temperature is preferably 75 to 105°C, and more preferably 81 to 99°C.

The amine-based latent curing agent (B) has an average particle size of preferably 0.1 to 20 μm, more preferably 0.2 to 5 μm, and still more preferably 0.3 to 1 μm.

When the amine-based latent curing agent (B) has an average particle size of 0.1 to 20 μm, it can exert an advantageous effect that the storage stability and the physical properties after curing become more stable.

The average particle size of the amine-based latent curing agent (B) is specifically obtained by measuring using a dry method and using a laser diffraction/scattering type particle size distribution analyzer LA-950V2 manufactured by HORIBA, Ltd. Details of the measurement method were mentioned in Examples.

The amine-based latent curing agent (B) has a melting point of preferably 65 to 140°C, more preferably 70 to 120°C, and still more preferably 75 to 100°C

When the amine-based latent curing agent (B) has a melting point of 65 to 140°C, it can exert an advantageous effect of being excellent in reactivity and storage stability.

The melting point of the amine-based latent curing agent (B) is obtained by measuring using the DSC method in accordance with JIS K7121. Details of the measurement method were mentioned in Examples.

The amine-based latent curing agent (B) preferably includes a bisphenol skeleton. The bisphenol skeleton is not particularly limited as long as the objective curable composition of the present invention can be obtained. Examples of the bisphenol skeleton include bisphenol A, bisphenol F, bisphenol AD and the like, and the bisphenol skeleton preferably includes at least one selected from bisphenol A, bisphenol F and bisphenol AD.

When the amine-based latent curing agent (B) includes a bisphenol skeleton, it can exert an advantageous effect that physical properties and adhesion after curing are excellent.

The amine-based latent curing agent (B) preferably has at least one selected from a pyrazine ring, an adamantane ring and an indole ring.

When the amine-based latent curing agent (B) has at least one selected from a pyrazine ring, an adamantane ring and an indole ring, it can exert an advantageous effect of being excellent in balance among low temperature curability,

storage stability and adhesion.

The amine-based latent curing agent (B) preferably includes at least one (B1) selected from an amine-based curing agent having a pyrazine ring (B1-1), an amine-based curing agent having an adamantane ring (B1-2) and an amine-based curing agent having an indole ring (B1-3), and may include two or more thereof.

In the embodiment of the present invention, the amine-based curing agent having a pyrazine ring (B1-1) is an amine compound having a pyrazine ring, and may be an aliphatic amine, an alicyclic amine or an aromatic amine, and may be an amine adduct of an epoxy resin with such an amine compound, and is not particularly limited as long as the objective low-temperature curable composition of the present invention can be obtained. As used herein, the term "pyrazine ring" includes "pyrimidine ring" and "pyridazine ring" as structural isomers with different positions of nitrogen atoms.

In the embodiment of the present invention, the amine-based curing agent having a pyrazine ring (B1-1) includes a mixture of an amine compound having a pyrazine ring (B2-1), a bisphenol A type epoxy resin (B3) and a phenol novolac (B4), which may be a reaction mixture. The amine compound (B2-1) having a pyrazine ring is not particularly limited as long as the objective low-temperature curable composition of the present invention can be obtained, and examples thereof include aminopyrazine, diaminopyrazine, methylaminopyrazine, methyldiaminopyrazine, ethylaminopyrazine, 3-aminopyrazine-2-carboxylic acid and the like. The amine compound having a pyrazine ring (B2-1) may have, for example, an active hydrogen equivalent of 20 to 300 g/eq, and preferably 50 to 180 g/eq.

The amount of the moiety derived from (or based on) the amine compound having a pyrazine ring (B2-1) in the amine-based curing agent (B1-1) having a pyrazine ring may be, for example, 1 to 20% by mass, preferably 2 to 15% by mass, and more preferably 3 to 10% by mass. When the amount of the moiety derived from the amine compound having a pyrazine ring (B2-1) is 1% by mass or more, the low-temperature curability is more excellent, and when it is 20% by mass or less, the storage stability is more excellent.

In the embodiment of the present invention, the amine-based curing agent having an adamantane ring (B1-2) is an amine compound having an adamantane ring, which may be an aliphatic amine, an alicyclic amine or an aromatic amine. Furthermore, it may be an amine adduct of an epoxy resin with such an amine compound, and is not particularly limited as long as the objective low-temperature curable composition of the present invention can be obtained.

In the embodiment of the present invention, the amine-based curing agent having an adamantane ring (B1-2) includes a mixture of an amine compound having an adamantane ring (B2-2), a bisphenol A type epoxy resin (B3) and a phenol novolac (B4), which may be a reaction mixture. The amine compound having an adamantane ring (B2-2) is not particularly limited as long as the objective low-temperature curable composition of the present invention can be obtained, and examples thereof include various adamantane derivatives such as 1-adamantylamine, 1,3-diaminoadamantane, methylaminoadamantane, methyldiaminoadamantane and ethylaminoadamantane.

The amine compound having an adamantane ring (B2-2) may have, for example, an active hydrogen equivalent of 20 to 300 g/eq, and preferably 50 to 180 g/eq.

The amount of the moiety derived from (or based on) the amine compound having an adamantane ring (B2-2) in the amine-based curing agent having an adamantane ring (B1-2) may be, for example, 1 to 20% by mass, preferably 2 to 15% by mass, and more preferably 3 to 10% by mass. When the amount of the moiety derived from the amine compound having an adamantane ring (B2-2) is 1% by mass or more, the low temperature curability is more excellent, and when it is 20% by mass or less, the storage stability is more excellent.

In the embodiment of the present invention, the amine-based curing agent having an indole ring (B1-3) is an amine compound having an indole ring, which may be an aliphatic amine, an alicyclic amine or an aromatic amine. Furthermore, it may be an amine adduct of an epoxy resin with such an amine compound, and is not particularly limited as long as the objective low-temperature curable composition of the present invention can be obtained. As used herein, the term "indole ring" includes "isoindole ring" as structural isomers with different positions of nitrogen atoms.

In the embodiment of the present invention, the amine-based curing agent having an indole ring (B1-3) includes a mixture of an amine compound having an indole ring (B2-3), a bisphenol A type epoxy resin (B3) and a phenol novolac (B4), which may be a reaction mixture. The amine compound having an indole ring (B2-3) is not particularly limited as long as the objective low-temperature curable composition of the present invention can be obtained, and examples thereof include aminoindole, diaminoindole, methylaminoindole, methyldiaminoindole, ethylaminoindole, 3-aminoindole-2-carboxylic acid and the like. The amine compound having an indole ring (B2-3) may have, for example, an active hydrogen equivalent of 20 to 300 g/eq, and preferably 50 to 180 g/eq.

The amount of the moiety derived from (or based on) the amine compound having an indole ring (B2-3) in the amine-based curing agent having an indole ring (B1-3) may be, for example, 1 to 20% by mass, preferably 2 to 15% by mass, and more preferably 3 to 10% by mass. When the amount of the moiety derived from the amine compound having an indole ring (B2-3) is 1% by mass or more, the low-temperature curability is more excellent, and when it is 20% by mass or less, the storage stability is more excellent.

It is possible to use, as the bisphenol A type epoxy resin (B3), for example, those having an epoxy equivalent of 100 to 1,300 g/eq, and preferably 200 to 600 g/eq. The amine-based curing agent having a pyrazine ring (B1-1), the

amine-based curing agent having an adamantane ring (B1-2) and the amine-based latent curing agent having an indole ring (B) can generally contain the above-mentioned bisphenol A type epoxy resin (B3) in an amount of, for example, 10 to 80% by mass, preferably 30 to 75% by mass, and more preferably 40 to 70% by mass. The content of the bisphenol A type epoxy resin (B3) is preferably 10% by mass or more, which makes it easy to ensure the adhesion, and preferably 80% by mass or less, which makes it possible to ensure the curability. Commercially available products can be used as the bisphenol A type epoxy resin (B3), and examples thereof include JER828 manufactured by Mitsubishi Chemical Corporation and JER1001 manufactured by Mitsubishi Chemical Corporation.

It is possible to use, as the phenol novolak (B4), for example, those having a hydroxyl group equivalent of 90 to 250 g/eq, preferably 95 to 150 g/eq, for example, those having a number-average molecular weight of 190 to 5,000, and preferably 300 to 3,000. The amine-based latent curing agent (B) may contain the phenol novolac (B4) in an amount of, for example, 5 to 50% by mass, preferably 10 to 35% by mass, and more preferably 20 to 30% by mass. When the phenol novolac (B4) is contained in an amount of 5% by mass or more, it is easier to ensure the storage stability, and when it is contained in an amount of 50% by mass or less, it is easier to ensure the curability.

In the low-temperature curable composition according to the embodiment of the present invention, the amine-based latent curing agent (B) preferably includes a compound in a form in which an adduct reaction product of at least one amine compound (B2) selected from the amine compound having a pyrazine ring (B2-1), the amine compound having an adamantane ring (B2-2) and the amine compound having an indole ring (B2-3) with a bisphenol A type epoxy resin (B3) are neutralized with the above phenol novolac (B4).

In the low-temperature curable composition according to the embodiment of the present invention, the amine-based latent curing agent (B) preferably has a pyrazine ring, an adamantane ring and an indole ring in a total amount of, for example, 1 to 15% by mass, and preferably 2 to 9% by mass, based on 100% by mass of the total mass of the amine-based latent curing agent (B). The total content of the pyrazine ring, the adamantane ring and the indole ring can be calculated by extracting each area ratio of absorption peaks of the pyrazine ring, the adamantane ring and the indole ring from the pyrolysis GC/MS measurement.

The amount of the curable component (A) to be blended in the low-temperature curable composition according to the embodiment of the present invention is preferably 1 to 60 parts by mass, and more preferably 3 to 40 parts by mass, based on 100 parts by mass in view of adhesion.

The amount of the amine-based latent curing agent (B) to be blended in the low-temperature curable composition according to the embodiment of the present invention is preferably 0.5 to 40 parts by mass, more preferably 1 to 30 parts by mass, and may be 2 to 10 parts by mass, based on 100 parts by mass of the curable component (A) in view of the low-temperature curability and storage stability of the curable component (A).

The amine-based latent curing agent (B) has a melting point of preferably 60 to 120°C, preferably 70 to 100°C, and more preferably 75 to 90°C. When the melting point of the amine-based latent curing agent (B) is 60°C or higher, the storage stability of the low-temperature curable composition can be further improved, and when the melting point is 120°C or lower, the low-temperature curability of the low-temperature curable composition can be further improved.

The amine-based latent curing agent having an adamantane ring (B1-2) to be used in the low-temperature curable composition according to the embodiment of the present invention may include a normal amine compound (having no adamantane ring) (B2-4), an epoxy resin having an adamantane ring (B3-2) and a phenol novolac (B4). The above-mentioned normal amine compound (B2-4) is not particularly limited, and examples thereof include diaminopropane, diethylaminopropylamine, isophoronediamine, aminotrimethylcyclohexylamine and the like. The epoxy resin having an adamantane ring (B3-2) is not particularly limited, and examples thereof include 1,3-bis(4-glycidyloxyphenyl)adamantane, 1,3-bis(4-glycidyloxycyclohexyl)adamantane and the like. It is possible to use, as the amine compound (B2-4), those having an active hydrogen equivalent of 20 to 300 g/eq, and preferably 50 to 180 g/eq.

The amine-based latent composition having an adamantane ring (B1-2) according to the embodiment of the present invention can include a compound in a form in which an adduct reaction product of the amine compound having an adamantane ring (B2-1) with the bisphenol A type epoxy resin (B3) and/or an adduct reaction product of the normal amine compound (having no adamantane ring) (B2-4) with the epoxy resin having an adamantane ring (B3-2) are neutralized with the above phenol novolac (B4). Regarding this amine-based latent composition having an adamantane ring (B1-2), it is possible to refer to the description of the amine-based latent composition (B) and the amine-based latent composition having an adamantane ring (B1-2).

As used herein, the term "(C) thermoplastic resin" is a resin which softens and has plasticity when heated and solidifies when cooled, and includes at least one selected from a polyvinyl chloride-based (PVC) homopolymer, a vinyl chloride-vinyl acetate-based (PVC-PVA) copolymer (a copolymer of vinyl chloride and vinyl acetate) and an acrylic resin, and is not particularly limited as long as the objective low-temperature curable composition according to the present invention can be obtained.

When the composition according to the embodiment of the present invention contains (C) a thermoplastic resin, it is preferable because it imparts the flexibility to the cured product, leading to an improvement in elongation performance and toughness.

As used herein, the term "polyvinyl chloride-based homopolymer" is generally understood as a polyvinyl chloride-based homopolymer, and is a homopolymer of vinyl chloride, and is not particularly limited as long as the objective low-temperature curable composition of the present invention can be obtained.

Commercially available products can be used as the polyvinyl chloride-based homopolymer. Examples of these commercially available products include PSH-10 manufactured by Kaneka Corporation, PBM-6 manufactured by Kaneka Corporation, PSL-10 manufactured by Kaneka Corporation and the like. These polyvinyl chloride-based homopolymers can be used alone or in combination.

As used herein, the term "vinyl chloride-vinyl acetate-based (PVC-PVAc) copolymer" is generally understood as a copolymer of vinyl chloride and vinyl acetate, and is not particularly limited as long as the low-temperature curable composition according to the present invention can be obtained.

In the composition according to the embodiments of the present invention, the vinyl chloride-vinyl acetate-based (PVC-PVAC) copolymer can include a repeating unit derived from vinyl acetate in a proportion of, for example, 1 to 15% by weight, preferably 3 to 12% by mass, more preferably 5 to 10% by mass, and still more preferably 7.5 to 9.5% by mass. By including the copolymer of vinyl acetate and vinyl chloride, the low-temperature curable composition according to the embodiment of the present invention can exhibit cured physical properties and adhesion at a lower temperature.

The amount (% by mass) of the repeating unit derived from vinyl acetate included in the copolymer of vinyl acetate and vinyl chloride can be determined as follows.

After mixing 100 mg of a copolymer of vinyl acetate and vinyl chloride and 10 mg of KBr, the thus obtained mixture is ground and molded to prepare a measurement sample. An infrared absorption spectrum of this measurement sample is measured using an infrared spectrophotometer (for example, FTIR-8100A (trade name) manufactured by Shimadzu Corporation). The Abs. value of peak 1 (absorption peak top due to C-H in-plane deformation at near 1,430 $cm^{-1}$) (hereinafter referred to as "A1"), and the Abs. value of peak 2 (absorption peak top due to C=O stretching at near 1,740 $cm^{-1}$) (hereinafter referred to as "A2") are read. Calculation is made from the following equation.

$$\text{Content of repeating unit derived from vinyl acetate (\% by mass)} = ((3.73 \times A2/A1 + 0.024) \times 1.04$$

In the embodiment of the present invention, the copolymer of vinyl acetate and vinyl chloride can further contain a compound represented by the following general formula (1). The copolymer of vinyl acetate and vinyl chloride may contain the compound represented by the general formula (1) below in an amount of, for example, 100 to 3,000 ppm, and more preferably 500 to 2,000 ppm:

[Chemical Formula 1]

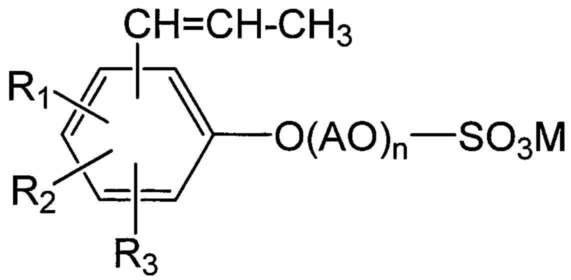

(1)

wherein, in the general formula (1), $R_1$ represents an alkyl group, an alkenyl group or an aralkyl group having 6 to 18 carbon atoms, $R_2$ represents hydrogen or an alkyl group, alkenyl group or an aralkyl group having 6 to 18 carbon atoms, an, $R_3$ represents a hydrogen or a propenyl group, A represents an alkylene group having 2 to 4 carbon atoms, n represents an integer of 1 to 200, and M represents an alkali metal, an ammonium ion or an alkanolamine residue.

In the general formula (1), it is preferable that $R_1$ has 7 to 11 carbon atoms, $R_2$ and $R_3$ are hydrogen, A is an alkylene group having 2 to 3 carbon atoms, and n is 1 to 40. When the sol composition according to the embodiment of the present invention contains a copolymer of vinyl acetate and vinyl chloride, which contains the compound represented by the general formula (1), it is more excellent in cured physical properties at low temperature and storage stability, and is more excellent for automobile manufacturing.

The compound represented by the general formula (1) is, for example, a compound selected from the group consisting of a nonylpropenylphenol-ethylene oxide 10 mol adduct sulfate ammonium salt, a nonylpropenylphenol-ethylene oxide 20 mol adduct sulfate ammonium salt, an octyldipropenylphenol-ethylene oxide 10 mol adduct sulfate

ammonium salt, an octyldipropenylphenol-ethylene oxide 100 mol adduct sulfate ammonium salt, a dodecylpropenylphenol-ethylene oxide 20 mol adduct sulfate sodium salt, a dodecylpropenylphenol-propylene oxide 10 mol random adduct sulfate sodium salt, a dodecylpropenylphenol-butylene oxide 4 mol blocked adduct sulfate sodium salt and a dodecylpropenylphenol-ethylene oxide 30 mol blocked adduct sulfate sodium salt, and is preferably the compound.selected from the group.

The compound represented by the general formula (1) is more preferably a compound selected from the group consisting of a nonylpropenylphenol-ethylene oxide 10 mol adduct sulfate ammonium salt and a nonylpropenylphenol-ethylene oxide 20 mol adduct sulfate ammonium salt. The sol composition according to the embodiment of the present invention is more excellent for automobile manufacturing when it contains a copolymer of vinyl acetate and vinyl chloride, which contains the compound represented by the general formula (1).

The compound represented by the general formula (1) can also act as a surfactant during producing a copolymer of vinyl acetate and vinyl chloride, and can contribute to the storage stability etc. of the low-temperature curable composition according to the embodiment of the present invention, and is particularly excellent in cured physical properties at low temperatures and storage stability, and is particularly excellent for automobile manufacturing.

When the low-temperature curable composition according to the embodiment of the present invention contains the compound represented by the general formula (1), the storage stability can be improved.

When the low-temperature curable composition according to the embodiment of the present invention further includes (D) a plasticizer such as an alkylbenzyl phthalate or phenyl alkyl sulfonate-based plasticizer, deterioration of the storage stability can be suppressed while improving the curability. Although the storage stability or the like can also be improved by post-adding the compound represented by the general formula (1), the compound represented by the general formula (1) is preferably included in the copolymer of vinyl acetate and vinyl chloride. The compound represented by the general formula (1) may be included in a form of a repeating unit in which an ethylenic double bond opens.

As used herein, the term "acrylic resin" is also referred to as a (meth)acrylic resin, and includes an acrylic resin and/or a (meth)acrylic resin, and is not particularly limited as long as the objective low-temperature curable composition according to the present invention can be obtained.

The thermoplastic resin (C) preferably includes an acrylic resin, and the acrylic resin more preferably has a carboxyl group and/or an acetoacetyl group. An acrylic resin having a core-shell structure is preferable in order to achieve both storage stability and curability.

The acrylic resin is preferable because it is easily available and is excellent in low-temperature curability, storage stability and adhesion. When the (meth)acrylic resin has a carboxyl group and/or an acetoacetyl group, interfacial fracture (AF) is less likely to occur at a lower temperature and cohesive fracture (CF) is likely to occur, which is more preferable.

The thermoplastic resin (C) can include, in addition to the above-mentioned vinyl chloride homopolymer, vinyl chloride-vinyl acetate copolymer and acrylic resin, for example, vinyl chloride-based resins (excluding the above-mentioned vinyl chloride-vinyl acetate copolymer) such as copolymers of vinyl chloride and vinyl having a hydroxyl group, and copolymers of vinyl chloride and vinyl having an acid group, polyolefin-based resins (for example, polyethylene, polypropylene, etc.), vinylidene chloride resins, polystyrene resins, polyvinylacetate resins, fluororesins such as polyfluoroethylene, ABS (acrylonitrile-butadienestyrene) resins, AS (acrylonitrile-styrene) resins and the like.

The low-temperature curable composition according to the embodiment of the present invention may contain the thermoplastic resin (C) in an amount of, for example, 1 to 50 parts by mass, preferably 2 to 40 parts by mass, more preferably 3 to 35 parts by mass, and still more preferably 5 to 30 parts by mass, based on 100 parts by mass of the entire composition.

The low-temperature curable composition according to the embodiment of the present invention may contain the above-mentioned vinyl chloride homopolymer in an amount of, for example, 1 to 50 parts by mass, preferably 2 to 40 parts by mas, more preferably 3 to 35 parts by mass, and still more preferably 5 to 30 parts by mass, based on 100 parts by mass of the entire composition.

The low-temperature curable composition according to the embodiment of the present invention may include the above-mentioned vinyl chloride-vinyl acetate copolymer in an amount of, for example, 1 to 50 parts by mass, preferably 2 to 40 parts by mass, more preferably 3 to 35 parts by mass, and still more preferably 5 to 30 parts by mass, based on 100 parts by mass of the entire composition.

The low-temperature curable composition according to the embodiment of the present invention may include the acrylic resin in an amount of, for example, 1 to 50 parts by mass of, preferably 2 to 40 parts by mass, more preferably 3 to 35 parts by mass, and still more preferably 5 to 30 parts by mass, based on 100 parts by mass of the entire composition.

As used herein, the term "(D) plasticizer" can be added to the thermoplastic resin (C) to increase the plasticity and soften the thermoplastic resin, and there is no particular limitation as long as the objective low-temperature curable composition of the present invention can be obtained.

Examples of the plasticize include alkylbenzyl phthalates such as butyl benzyl phthalate (BBP), octyl benzyl phthalate (OBP) and isononyl benzyl phthalate; dimethylcyclohexylphthalate (DMCHP); polyester phthalate; benzoate ester; dialkylphthalates such as diisononyl phthalate (DINP), dioctyl phthalate (DOP), dimethyl phthalate (DMP), diethyl

phthalate (DEP), dibutyl phthalate (DBP), diheptyl phthalate (DHP), dinonyl phthalate (DNP), didecyl phthalate (DDP), dinormal octyl phthalate (DnOP), diisodecyl phthalate (DIDP) and bis-2-ethylhexyl phthalate (DEHP); and trimellitic acid triesters such as trioctyl trimellitate (TOTM), trioctyl trimellitate (TOTN), triisooctyl trimellitate and triisodecyl trimellitate.

The plasticizer preferably includes a phthalic acid diester, and the phthalic acid diester more preferably includes an alkylbenzyl phthalate and/or a dialkyl phthalate.

When the plasticizer includes a phthalic acid diester, it is preferable that the storage stability is excellent while having appropriate curability, and when the plasticizer includes an alkylbenzyl phthalate and/or a dialkyl phthalate, it is more preferable that the curability is enhanced.

The low-temperature curable composition according to the embodiment of the present invention may include the plasticizer in an amount of, for example, 5 to 60 parts by mass, preferably 10 to 55 parts by mass, more preferably 15 to 50 parts by mass, and still more preferably 20 to 40 parts by mass, based on 100 parts by mass of the entire composition.

The low-temperature curable composition according to the embodiment of the present invention may include the above-mentioned phthalic acid diester in an amount of, for example, 5 to 60 parts by mass, preferably 10 to 55 parts by mass, more preferably 15 to 50 parts by mass, and still more preferably 20 to 40 parts by mass, based on 100 parts by mass of the entire composition.

The low-temperature curable composition according to the embodiment of the present invention may include the alkylbenzyl phthalate and/or the dialkyl phthalate in an amount of, for example, 0.1 to 60 parts by mass, preferably 0.3 to 20 parts by mass, more preferably 0.5 to 10 parts by mass, and still more preferably 1 to 5 parts by mass, based on 100 parts by mass of the entire composition.

The low-temperature curable composition according to the embodiment of the present invention may include the dialkyl phthalate in an amount of, for example, 0.1 to 60 parts by mass, preferably 0.2 to 30 parts by mass, more preferably 0.3 to 20 parts by mass, and still more preferably 0.5 to 10 parts by mass, based on 100 parts by mass of the entire composition.

The low-temperature curable composition according to the embodiment of the present invention may appropriately include other components. Examples of other components include normal curing agents (excluding the above-mentioned amine-based latent curing agent (B)), fillers, diluents, surfactants (excluding the above-mentioned compounds represented by the general formula (1)), other additives and the like.

In the embodiment of the present invention, the curing agent is a compound which has no curing action at room temperature but exhibits a curing action at a certain temperature, and excludes the above-mentioned amine-based latent curing agent (B), and there is no particular limitation as long as the low-temperature curable composition of the present invention can be obtained.

Examples of the curing agent include latent curing agents which can be activated at a temperature of 60°C or higher, preferably 100 to 200°C, and react with an epoxy resin (it is not preferable that the activation temperature is lower than 60°C because the viscosity increases, leading to deterioration of the storage stability), and specific examples thereof include dihydrazide compounds such as adipic acid dihydrazide, sebacic acid dihydrazide, isophthalalic acid dihydrazide, dodecandiohydrazide, 1,3-bis(hydrazinocarboethyl)-5-isopropylhydantoin, eicosanedioic acid dihydrazide, hydroquinonediglycolic acid dihydrazide, resorcinoldiglycolic acid dihydrazide, 4,4'-ethylidenebisphenoldiglycolic acid dihydrazide; 4,4'-diaminodiphenylsulfone; imidazole compounds such as imidazole and 2-n-heptandecylimidazole; melamine; benzoguanamine; N,N'-dialkylurea compounds; N,N'-dialkylthiourea compounds; polyamines having a melting point of 60°C or higher, which are solid at room temperature, such as diaminodiphenylmethane, diaminobiphenyl, diaminophenyl, phenylenediamine, tolylenediamine, dodecanediamine, decanediamine, octanediamine, tetradecanediamine, hexadecanediamine, polyoxypropylenediamine and hydrazide-based polyamines; and guanidine derivatives such as cyanoguanidine. These are used alone or in combination.

Commercially available products can be used as the curing agent, and examples thereof include C17Z (trade name) manufactured by Shikoku Chemicals Corporation, ADH (trade name) manufactured by Japan Hydrazide, EH3731s (trade name) manufactured by ADEKA CORPORATION and the like.

In the embodiment of the present invention, the filler is a compound capable of increasing the amount of the low-temperature curable composition according to the embodiment of the present invention and imparting a certain degree of the strength to the film formed from the low-temperature curable composition, and there is no particular limitation as long as the objective low-temperature curable composition of the present invention can be obtained.

Examples of the filler include carbonates and sulfates of alkaline earth metals, such as calcium carbonate (heavy calcium carbonate, precipitated calcium carbonate, surface-treated calcium carbonate, etc.), magnesium carbonate, barium sulfate, mica, graphite, talc, clay, glass flakes (glass beads), vermiculite, kaolinite, wollastonite (needle calcium metasilicate), silica, diatomaceous earth, gypsum, cement, converter slag, shilas, zeolite, cellulose powder, powdered rubber, xonotlite, potassium titanate, bentonite, aluminum nitride, silicon nitride, zinc white, titanium oxide, calcium oxide, alumina, zinc oxide, iron oxide, magnesium oxide, titanium oxide, magnesium hydroxide, aluminum hydroxide, calcium silicate, other calcium carbonate whisker (needle calcium carbonate), ceramic short fiber or whisker

thereof, rock wool short fiber, glass fiber short fiber, potassium titanate short fiber, calcium silicate short fiber, aluminum silicate, carbon fiber short fiber, aramid fiber short fiber, mineral fibers such as sepiolite, fibrous fillers such as various whiskers, hollow fillers such as glass balloon, silica balloon, resin balloon and carbon inorganic hollow sphere, organic hollow fillers such as plastic balloon made of organic synthetic resins such as vinylidene chloride and acrylic nitrile, and metallic fillers such as aluminum filler.

In the embodiment of the present invention, the diluent is not particularly limited as long as it can impart fluidity to the low-temperature curable composition of the present embodiment and the low-temperature curable composition of the present invention can be obtained.

Examples of the diluent include high boiling point hydrocarbon solvents such as naphtha and paraffin.

Commercially available products can be used as the diluent, and the boiling point of the diluent is preferably 100°C to 250°C, more preferably 150 to 220°C, and still more preferably 160 to 200°C. Examples thereof include Isopar H (trade name) manufactured by Exxon Mobil Corporation, D-40 (trade name) manufactured by Exxon Mobil Corporation, D-80 (trade name) manufactured by Exxon Mobil Corporation and the like.

In the embodiment of the present invention, examples of other additives include desiccants (calcium oxide, molecular sieves, etc.), thixotropy-imparting agents (organic bentonite, fumed silica, aluminum stearate, metal soaps, castor oil derivatives, etc.), stabilizers [2,6-di-t-butyl-4-methylphenol, 2,2-methylene-bis(4-methyl-6-t-butylphenol), nickel dibutyldithiocarbamate, etc.], curing accelerators (dibutyltin dilaurate, lead octylate, bismuth octylate, etc.) and the like. Other additives can be appropriately used without particular limitation as long as the objective low-temperature curable composition of the present invention can be obtained.

The low-temperature curable composition according to the embodiment of the present invention can be produced by mixing the above-mentioned components.

The low-temperature curable composition can be produced by mixing the above-mentioned components using a mixing disperser, specifically, for example, a planetary mixer, a kneader, an attritor, a grain mill, a roll, a dissolver or the like.

The low-temperature curable composition according to the embodiment of the present invention may or may not have a sol form, and may or may not have a plastisol form, and the above-mentioned components may or may not be present in a dispersion medium as a dispersoid, and may or may not be dissolved.

The low-temperature curable composition according to the embodiment of the present invention is preferably excellent in storage stability. The storage stability is determined as follows: after storage at 40°C for 7 days, the viscosity before and after the storage is measured and then evaluation is performed by an increase in percentage of the viscosity (viscosity increase rate) based on the viscosity before the storage. The detailed evaluation method was mentioned in Examples.

The viscosity increase rate is rated "A" (Excellent) when it is 40% or less, B (Good) when it is more than 40% and 60% or less, C (Fair) when it is more than 60% and 80% or less, D (Not Good) when it is more than 80%, and E (Poor) when gelation is observed.

The low-temperature curable composition according to the embodiment of the present invention is capable of maintain a state where cohesive fracture and interfacial fracture are mixed in a shear adhesion test while maintaining a shear strength of 30% or more at any temperature lower than that of normal curing conditions, for example, curing conditions when a normal curing agent is used instead of the component (B), and more specifically, at any temperature which is 10 to 40°C lower than the curing temperature when using other curing agents (b11) to (b14) shown in Examples (for example, at any temperature which is 10°C, 20°C, 30°C or 40°C lower). More preferably, it is cohesive fracture as a whole. Furthermore, it is preferable to maintain a higher shear strength. It is still more preferable that the shear strength of 50% or more and 70% or more can be maintained.

The tensile strength of the low-temperature curable composition according to the embodiment of the present invention is preferably 40% or more, more preferably 60% or more, and still more preferably 80% of the tensile strength of the composition under normal curing conditions at any temperature which is 10 to 40°C lower than that of normal curing conditions (for example, at any temperature which is 10°C, 20°C, 30°C or 40°C lower).

The elongation rate of the low-temperature curable composition according to the embodiment of the present invention is preferably 40% or more, more preferably 60% or more, and still more preferably 80% or more of the elongation rate of the composition under normal curing conditions at any temperature which is 10 to 40°C lower than that of normal curing conditions (for example, at any temperature which is 10°C, 20°C, 30°C or 40°C lower).

The low-temperature curable composition of the present embodiment can be applied to a place to be coated in an arbitrary thickness and coating form using a known coating method, for example, a coating method such as bead coating, slit coating, spray coating, swirl coating or shot coating and, for example, a coating film can be formed by heating to a predetermined temperature using a hot air circulation drying furnace or the like.

In the embodiment of the present invention, it is possible to provide a method for manufacturing an automobile, which comprises using the low-temperature curable composition according to the embodiment of the present invention.

The low-temperature curable composition according to the embodiment of the present invention can be used

in a painting process for manufacturing an automobile.

In the above coating means, coating can be performed by a computer-controlled automatic coating machine or a robot coating machine.

The present invention provides, in another aspect, a method for lowering a curing temperature of a curable composition, which comprises using the above-mentioned low-temperature curable composition.

[Examples]

Hereinafter, the present invention will be described in detail by way of Examples and Comparative Examples, but these Examples are merely one embodiment of the present invention, and the present invention is not limited to these Examples.

The components used in the present examples are shown below.

(A) Epoxy Resin and/or Blocked Isocyanate (Curable Component)

(a1) Epoxy resin (JER828 (trade name) manufactured by Mitsubishi Chemical Corporation)
(a2) Epoxy resin (EPU78-11 (trade name) manufactured by ADEKA CORPORATION)
(a3) Epoxy resin (ED-506 (trade name) manufactured by ADEKA CORPORATION)
(a4) Blocked urethane prepolymer (see Production Examples mentioned below)
(a5) Mixture of 30% of nonylphenol block and 70% of DINP of tolylene diisocyanurate (effective isocyanate equivalent: 16%)
(a6) Tolylene diisocyanate-based blocked isocyanate (N269A (trade name) manufactured by Air Products and Chemicals, Inc.)
(a7) Hexamethylene diisocyanurate oxime block (80%)/DINP (20%) (effective NCO%: 5%)
(a8) Hexamethylene diisocyanate-based blocked isocyanate (QR-9262 (trade name) manufactured by ADEKA CORPORATION)

(B) Amine-Based Latent Curing Agent

(b1) Amine-based latent curing agent (EH4358 (trade name) manufactured by ADEKA CORPORATION), melting point: about 95°C, reaction temperature peak with bisphenol A type epoxy resin is 85°C
(b2) Amine-based latent curing agent (EH5030s (trade name) manufactured by ADEKA), melting point: about 80°C, reaction temperature peak with bisphenol A type epoxy resin is 93°C
(b3) Amine-based latent curing agent (1090MP (trade name) manufactured by Fuji Kasei Industry Co., Ltd.), temperature peak of reaction with bisphenol A type epoxy resin is 87°C
(b4) Amine-based latent curing agent having a pyrazine ring (pyrazine ring content: 8%) (see Production Example 1 below), temperature peak of reaction with bisphenol A type epoxy resin is 90°C
(b5) Amine-based latent curing agent having an adamantane ring (adamantane ring content: about 5%) (see Production Example 2 mentioned below), temperature peak of reaction with bisphenol A type epoxy resin is 88°C
(b6) Amine-based latent curing agent having an indole ring (indole ring content: about 5%) (see Production Example 3 mentioned below), temperature peak of reaction with bisphenol A type epoxy resin is 78°C
(b7) Amine-based latent curing agent having an indole ring and an adamantane ring (adamantane ring content: about 3.6%/indole ring content: about 5%) (see Production Example 4 mentioned below), temperature peak of reaction with bisphenol A type epoxy resin is 95°C
(b8) Amine-based latent curing agent having an indole ring and an adamantane ring (adamantane ring content: about 3%/indole ring content: about 3%) (see Production Example 5 mentioned below), temperature peak of reaction with bisphenol A type epoxy resin is 88°C

Other Curing Agents

(b11) Imidazole-based curing agent (2P4MZ (trade name) manufactured by Shikoku Chemicals Corporation), melting point: 174 to 184°C, temperature peak of reaction with bisphenol A type epoxy resin is 150°C or higher

(b12) Urea-based curing agent (Dyhard (registered trademark) UR200 (trade name) manufactured by AlzChem), temperature peak of reaction with bisphenol A type epoxy resin is 144°C
(b13) Imidazole-based curing agent (ADH (trade name) manufactured by Otsuka Chemical Co., Ltd.), temperature peak of reaction with bisphenol A type epoxy resin is 150°C or higher
(b14) Dicyandiamide, temperature peak of reaction with bisphenol A type epoxy resin is 150°C or higher

(C) Thermoplastic Resin selected From PVC Homopolymer, PVC Copolymer Component and Acrylic Resin

(c1) Acrylic resin having a carboxyl group (LP-3106 (trade name) manufactured by Mitsubishi Chemical Corporation)
(c2) Acrylic resin having an acetoacetyl group (LP-3121 (trade name) manufactured by Mitsubishi Chemical Corporation)
(c3) Vinyl chloride-based resin (polyvinyl chloride homopolymer) (PSH-10 (trade name) manufactured by Kaneka Corporation)
(c4) Vinyl chloride-based resin (polyvinyl chloride homopolymer) (PBM-6 (trade name) manufactured by Kaneka Corporation)
(c5) Vinyl chloride-based resin (vinyl acetate content: 7%, vinyl chloride-vinyl acetate copolymer) (PCH-843 manufactured by Kaneka Corporation (trade name))

(D) Plasticizer

(d1) Diisononyl phthalate
(d2) Octyl benzyl phthalate

Others

Filler, HAKUENKA CCR (trade name) manufactured by Shiraishi Kogyo Kaisha, Ltd.
Filler, BF200 (trade name) manufactured by BIHOKU FUNKA KOGYO CO., LTD.
Diluent, ISOPAR H manufactured by Exxon Mobile Corporation Other Additives
QS30 (trade name) manufactured by Tokuyama Corporation
Calcium oxide QC-X (trade name) manufactured by Inoue Calcium Corporation NYAD325 (trade name) manufactured by NYCO Minerals
Carbon black #30 (trade name) manufactured by Mitsubishi Chemical Corporation

<(A) Method for Producing Curable Component>

(a4) Production of block urethane prepolymer (Production Example)

100 Parts of polyether polyol (EL-5030 (trade name) manufactured by Asahi Glass Co., Ltd., molecular weight: 5,000, functional value: 3) and 16.4 parts of MDI (NCO/OH = 2.2) were reacted at 80°C for 5 hours to obtain a terminal NCO-containing urethane prepolymer. In the presence of 0.008 part of dibutyltin dilaurate, 6.5 parts of methyl ethyl ketoxime was then reacted at 50°C for 5 hours, and it was confirmed by IR that NCO disappeared, thus obtaining (a4) a blocked urethane prepolymer.

<(B) Method for Producing Amine-Based Latent Curing Agent>

(b4) Production of amine-based latent curing agent having a pyrazine ring (Production

Example 1)

In a mixture of 75 g of methyldiaminopyrazine (amine compound having a pyrazine ring) and 125 g of diaminopropane, 500 g of a bisphenol A type epoxy resin (jER828 (trade name) manufactured by Mitsubishi Chemical Corporation) was added dropwise at 110°C for 180 minutes little by little. After stirring at 130°C for 60 minutes, an adduct

reaction product (epoxy resin-amine adduct) was obtained. Next, 250 g of phenol novolac (KAYAHARD KTG-105 (trade name) manufactured by NIPPON KAYAKU CO., LTD., hydroxyl group equivalent: 105 g/eq and softening point: 103°C) was added, followed by neutralization at 180°C for 60 minutes to obtain (b4) an amine-based latent curing agent having a pyrazine ring (melting point: 82°C; pyrazine ring content: 8%).

(b5) Production of an amine-based latent curing agent having an adamantane ring

(Production Example 2)

In a flask, 150 g of 1,2-diaminopropane was added and heated to 60°C. To this, a mixture of 290 g of BPA glycidyl ether (bisphenol A glycidyl ether) (ADEKA RESIN EP-4100 (trade name) manufactured by Adeka Corporation) and 110 g of 1,3-bis(4-glycidyloxyphenyl)adamantane was added little by little while stirring to perform a reaction. After the addition, the reaction mixture was heated to 140°C and stirred for 1.5 hours to perform an addition reaction of amine and an epoxy group, thus obtaining a reaction product.

To the reaction product, 110 g of a phenol novolac resin (MP-800K (trade name) manufactured by Asahi Yukizai Corporation, softening point: 73°C) was added, and a melt masking reaction was performed at 150°C for 60 minutes to obtain (b5) an amine-based latent curing agent having an adamantane ring (adamantane ring content is about 5%).

(b6) Production of an amine-based latent curing agent having an indole ring

(Production Example 3)

In a flask, 150 g of 1,2-diaminopropane was added and heated to 60°C. To this, a mixture of 290 g of BPA glycidyl ether (ADEKA RESIN EP-4100 (trade name) manufactured by Adeka Corporation) and 110 g of an indole-containing epoxy resin was added little by little while stirring to perform a reaction. After the addition, the reaction mixture was heated to 140°C and stirred for 1.5 hours to perform an addition reaction of amine and an epoxy group, thus obtaining a reaction product.

To the reaction product, 110 g of a phenol novolac resin (MP-800K (trade name) manufactured by Asahi Yukizai Corporation, softening point: 73°C) was added, and a melt masking reaction was performed at 150°C for 60 minutes to obtain (b6) an amine-based latent curing agent having an indole ring (indole ring content is about 5%).

(b7) Amine-based latent curing agent having an indole ring and an adamantane ring

(Production Example 4)

In a flask, 30 g of 1,3-diaminoadamantane and 120 g of 1,2-diaminopropane were added, and the mixture was heated to 60°C. To this, a mixture of 290 g of BPA glycidyl ether (ADEKA RESIN EP-4100 (trade name) manufactured by Adeka Corporation) and 110 g of an epoxy resin having an indole ring (INRE shown in the following formula) was added little by little with stirring to perform a reaction.

[Chemical Formula 2]

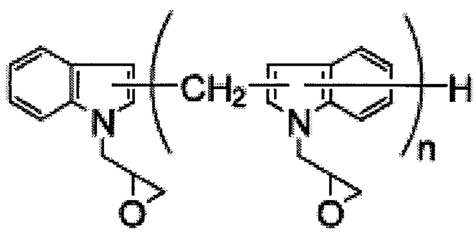

INRE

After the addition, the reaction mixture was heated to 140°C and stirred for 1.5 hours to perform an addition reaction of amine and an epoxy group, thus obtaining a reaction product.

To the above reaction product, 110 g of a phenol novolac resin (MP-800K (trade name) manufactured by Asahi Yukizai Corporation, softening point: 73°C) was added, and a melt masking reaction was performed at 150°C for 60

minutes to obtain (b7) an amine-based latent curing agent having an indole resin and an adamantane ring (adamantane ring content is about 3.6%/indole ring content is about 5%).

(b8) Amine-based latent curing agent having an indole ring and an adamantane ring

(Production Example 5)

In a flask, 150 g of 1,2-diaminopropane was added and heated to 60°C. To this, a mixture of 260 g of BPA glycidyl ether (ADEKA RESIN EP-4100 (trade name) manufactured by Adeka Corporation), 70 g of 1,3-bis(4-glycidyloxyphenyl)adamantane and 70 g of an epoxy resin having an indole ring (INRE shown in the above formula) was added little by little while stirring to perform a reaction. After the addition, the reaction mixture was heated to 140°C and an addition reaction of amine and an epoxy group was performed for 1.5 hours to obtain a reaction product.
To the above reaction product, 110 g of phenol novolac resin (MP-800K (trade name) manufactured by Asahi Yukizai Corporation, softening point: 73°C) was added, and a melt masking reaction was performed at 150°C for 60 minutes to obtain (b8) an amine-based latent curing agent having an indole ring and an adamantane ring (adamantane ring content is about 3%/indole ring content is about 3%).

Temperature peak of reaction of an amine-based latent curing agent (B) with a bisphenol A type epoxy resin

An amine-based latent curing agent (B) and a bisphenol A type epoxy resin (JER828 (trade name) manufactured by Mitsubishi Chemical Corporation) were mixed in a ratio of bisphenol A type epoxy resin to amine-based latent curing agent (B) (bisphenol A type epoxy resin/amine-based latent curing agent (B)) (100/6, mass ratio). Using Q2000 (trade name) manufactured by TA Instruments Japan Inc., the mixture was heated from 25°C to 200°C at a rate of 5°C/min to obtain a peak of the reaction temperature. The measurement results of the reaction temperature have already been mentioned.

Measurement of melting point of amine-based latent curing agent (B).

Using Q2000 (trade name) manufactured by TA Instruments Japan Inc., an amine-based latent curing agent (B) was heated from 25°C to 200°C at a rate of 2°C/min to obtain a melting peak. The peak top of the melting peak was regarded as the melting point. The results have already been mentioned.
These components were blended in each ratio shown in Tables 1 to 6 to prepare curable compositions of Examples 1 to 53 and Comparative Examples 1 to 43.
The thus obtained curable compositions of Examples 1 to 53 and Comparative Examples 1 to 43 were evaluated as follows. The evaluation results are summarized in Tables 1 to 6.

(Shear Strength and Fracture State)

Using a electrodeposited coated steel plate (or sheet) measuring 25 × 100 × 1 mm or a SPCC steel plate (or sheet) measuring 25 × 100 × 1.6 mm, each of shear adhesion test pieces having a predetermined lap length (25 mm or 12.5 mm) and a predetermined thickness (1 mm or 0.15 mm) was fabricated and then baked while maintaining under the predetermined conditions (baking temperature and time are shown in Tables 1 to 6), and after 24 hours in the standard state (20°C × 65%), the shear strength was measured in accordance with JASO M 323-77 9.20. Thereafter, the state of the fracture state was confirmed. The evaluation criteria for the fracture state are as follows.

CF: Cohesive fracture of adhesive layer
AF: Interface fracture between adherend and adhesive layer

Predetermined conditions:

A: Adherend and bonding conditions: 1.6 mm SPCC steel plate, wrap length: 12.5 mm, adhesive thickness: 0.15 mm (used in Tables 1 and 2)
B: Adherend and bonding conditions: 1 mm electrodeposited coated steel plate, wrap length: 25 mm, adhesive thickness: 1 mm (used in Tables 3 to 6)

(Tensile Strength and Elongation)

In accordance with 9.17 Tensile Test method A of JASO M 323-77, each of test pieces were fabricated and

baked under the predetermined curing conditions (predetermined baking conditions mentioned above), and after 24 hours, the strength and elongation at break were measured.

Storage Stability of Sol Composition

The viscosity change rate after 7 days at 40°C was calculated as follows.
In accordance with Viscosity Test Method A of JASO M323-77, the viscosity was measured at 20 rotations after 1 minute using No. 7 rotor. The viscosity change rate (%) was calculated by the following formula.

$$\text{Change rate} = (n_2 - n_1)/n_1 \times 100$$

where n1: initial viscosity, n2: viscosity after standing at 40°C
[Table 1]

| | | | Example | | | | | | | |
|---|---|---|---|---|---|---|---|---|---|---|
| | | | 1 | 2 | 3 | 4 | 5 | 6 | 7 | 8 |
| Composition | (A) | (a1) | 30 | 30 | 30 | 30 | 30 | 30 | 30 | 30 |
| | | (a2) | 15 | 15 | 15 | 15 | 15 | 15 | 15 | 15 |
| | | (a3) | 10 | 10 | 10 | 10 | 10 | 10 | 10 | 10 |
| | (B) | (b1) | | 4 | | | | | 2 | |
| | | (b2) | 4 | | | | | | 2 | |
| | | (b4) | | | 4 | | | | | 2 |
| | | (b5) | | | | 4 | | | | 2 |
| | | (b6) | | | | | 4 | | | |
| | | (b8) | | | | | | 4 | | |
| | | (b11) | | | | | | | | |
| | | (b14) | 5 | 5 | 5 | 5 | 5 | 5 | 5 | 5 |
| | Additives | QC-X | 2 | 2 | 2 | 2 | 2 | 2 | 2 | 2 |
| | | NYAD325 | 20 | 20 | 20 | 20 | 20 | 20 | 20 | 20 |
| | | Carbon | 8 | 8 | 8 | 8 | 8 | 8 | 8 | 8 |
| | Filler | BF-200 | 6 | 6 | 6 | 6 | 6 | 6 | 6 | 6 |
| | Total | | 100 | 100 | 100 | 100 | 100 | 100 | 100 | 100 |
| Properties | | | | | | | | | | |
| | 160°C for 20 minutes | Shear strength (MPa) | 23.5 | 22.8 | 22.5 | 23.0 | 22.2 | 22.5 | 23.0 | 23.2 |
| | 120°C for 20 minutes | Shear strength (MPa) | 10.1 | 10.5 | 9.8 | 8.8 | 8.5 | 10.2 | 10.0 | 10.5 |
| | 40°C for 7 days | Viscosity change rate (%) | 35 | 28 | 39 | 40 | 32 | 35 | 30 | 28 |

[Table 2]

| | | | Example | | Comparative Example | |
|---|---|---|---|---|---|---|
| | | | 9 | 10 | 1 | 2 |
| Composition | (A) | (a1) | 30 | 30 | 30 | 30 |
| | | (a2) | 15 | 15 | 15 | 15 |
| | | (a3) | 10 | 10 | 10 | 10 |
| | (B) | (b1) | | | | |
| | | (b2) | | | | |
| | | (b4) | 2 | 2 | | |
| | | (b5) | | | | |
| | | (b6) | 2 | | | |
| | | (b8) | | 2 | | |
| | | (b11) | | 4 | 4 | |
| | | (b14) | 5 | 5 | 5 | 5 |
| | Additives | QC-X | 2 | 2 | 2 | 2 |
| | | NYAD325 | 20 | 20 | 20 | 20 |
| | | Carbon | 8 | 8 | 8 | 8 |
| | Filler | BF-200 | 6 | 6 | 6 | 6 |
| | Total | | 100 | 100 | 100 | 96 |
| Properties | | | | | | |
| | 160°C for 20 minutes | Shear strength (MPa) | 22.5 | 23.8 | 23.5 | - |
| | 120°C for 20 minutes | Shear strength (MPa) | 9.8 | 9.5 | - | - |
| | 40°C for 7 days | Viscosity change rate (%) | 33 | 40 | 20 | 18 |

[Table 3]

| | | | Example | | | | | | | |
|---|---|---|---|---|---|---|---|---|---|---|
| | | | 21 | 22 | 23 | 24 | 25 | 26 | 27 | 28 |
| Composition | (A) | (a1) | | | | | | | | 0.7 |
| | | (a4) | 5 | 5 | 5 | 5 | 5 | 5 | 5 | 4.4 |
| | (B) | (b1) | 1 | | | | | | | |
| | | (b2) | | | | | | | | 0.2 |
| | | (b3) | | 1 | | | | | | |
| | | (b4) | | | 1 | | | | | |
| | | (b5) | | | | | 1 | | | |
| | | (b6) | | | | | | 1 | | |
| | | (b7) | | | | | | | | |
| | | (b8) | | | | 1 | | | 1 | 0.8 |
| | | (b11) | | | | | | | | |
| | | (b12) | | | | | | | | |
| | | (b13) | | | | | | | | |
| | (C) | (c1) | | | | | | | 21 | |
| | | c2 | 21 | 21 | 21 | 21 | 21 | 21 | | 21 |
| | (D) | (d1) | 23 | 23 | 23 | 23 | 23 | 23 | 23 | 23 |
| | | (d2) | 5 | 5 | 5 | 5 | 5 | 5 | 5 | 5 |
| | Filler | HAKUENKA CCR | 18 | 18 | 18 | 18 | 18 | 18 | 18 | 18 |
| | | BF-200 | 23 | 23 | 23 | 23 | 23 | 23 | 23 | 23 |
| | Diluent | ISOPER H | 2 | 2 | 2 | 2 | 2 | 2 | 2 | 2 |
| | Additives | QS30, QC-X | 2 | 2 | 2 | 2 | 2 | 2 | 2 | 2 |
| | Total | | 100 | 100 | 100 | 100 | 100 | 100 | 100 | 100 |
| Properties | | | | | | | | | | |
| | 100°C for 20 minutes | Shear strength (MPa) | 2.23 | 2.30 | 2.10 | 2.23 | 2.00 | 2.10 | 2.05 | 2.23 |
| | | Fracture state | CF | CF | CF | CF | CF | CF | CF | CF |
| | | Tensile strength (MPa) | 1.60 | 1.80 | 1.70 | 1.70 | 1.60 | 1.50 | 1.40 | 1.80 |
| | | Elongation (%) | 350 | 350 | 330 | 330 | 280 | 350 | 300 | 350 |
| | 90°C for 20 minutes | Shear strength (MPa) | 1.94 | 2.14 | 1.25 | 2.00 | 1.82 | 1.85 | 1.63 | 2.00 |
| | | Fracture state | CF | CF | CF/AF | CF | CF | CF | CF | CF |
| | | Tensile strength (MPa) | 1.49 | 1.52 | 1.3 | 1.45 | 1.2 | 1.2 | 1 | 1.45 |
| | | Elongation (%) | 300 | 300 | 250 | 280 | 240 | 260 | 220 | 280 |
| | 40°C for 7 days | Viscosity change rate (%) | 26 | 26 | 28 | 28 | 28 | 28 | 28 | 45 |

[Table 4]

| | | | Example | | | | | Comparative Example | | |
|---|---|---|---|---|---|---|---|---|---|---|
| | | | 29 | 30 | 31 | 32 | 33 | 21 | 22 | 23 |
| Composition | (A) | (a1) | | | | | | | | |
| | | (a4) | 5 | 5 | 5 | 2.5 | 10 | 5 | 5 | 5 |
| | (B) | (b1) | 1 | | | | | | | |
| | | (b2) | | | | | | | | |
| | | (b3) | | | | | | | | |
| | | (b4) | | | | | | | | |
| | | (b5) | | | | | | | | |
| | | (b6) | | | | | | | | |
| | | (b7) | | | | | | | | |
| | | (b8) | | 1 | 1 | 0.5 | 2 | | | |
| | | (b11) | | | | | | 1 | | |
| | | (b12) | | | | | | | 1 | |
| | | (b13) | | | | | | | | 1 |
| | (C) | (c1) | | | | | | | | |
| | | (c2) | 21 | 21 | 21 | 22 | 17 | 21 | 21 | 21 |
| | (D) | (d1) | 23 | 23 | 28 | 25 | 22 | 23 | 23 | 23 |
| | | (d2) | 5 | 5 | | 5 | 4 | 5 | 5 | 5 |
| | Filler | HAKUENKA CCR | 18 | 18 | 18 | 18 | 18 | 18 | 18 | 18 |
| | | BF-200 | 23 | 23 | 23 | 23 | 23 | 23 | 23 | 23 |
| | Diluent | ISOPER H | 2 | 2 | 2 | 2 | 2 | 2 | 2 | 2 |
| | Additives | QS30, QC-X | 2 | 2 | 2 | 2 | 2 | 2 | 2 | 2 |
| | Total | | 100 | 100 | 100 | 100 | 100 | 100 | 100 | 100 |

(continued)

| | | | Example | | | | | Comparative Example | | |
|---|---|---|---|---|---|---|---|---|---|---|
| | | | 29 | 30 | 31 | 32 | 33 | 21 | 22 | 23 |
| Properties | | | | | | | | | | |
| | 100°C for 20 minutes | Shear strength (MPa) | 2.25 | 2.35 | 1.85 | 2.55 | 2.15 | 1.95 | 2.00 | 2.15 |
| | | Fracture state | CF | CF | CF | CF | CF | CF | CF | CF |
| | | Tensile strength (MPa) | 1.70 | 1.80 | 1.40 | 1.70 | 1.50 | 1.80 | 1.80 | 1.60 |
| | | Elongation (%) | 300 | 320 | 250 | 330 | 300 | 280 | 290 | 280 |
| | 90°C for 20 minutes | Shear strength (MPa) | 2.00 | 2.00 | 1.20 | 2.30 | 1.80 | 0.80 | 0.80 | 0.80 |
| | | Fracture state | CF | CF | CF | CF | CF/AF | AF | AF | AF |
| | | Tensile strength (MPa) | 1.5 | 1.4 | 1.05 | 1.5 | 1.3 | 1.4 | 1.4 | 1.4 |
| | | Elongation (%) | 280 | 280 | 170 | 280 | 220 | 240 | 240 | 240 |
| | 40°C for 7 days | Viscosity change rate (%) | 25 | 25 | 20 | 38 | 25 | 30 | 30 | 30 |

[Table 5]

| | | | Example | | | | | | | |
|---|---|---|---|---|---|---|---|---|---|---|
| | | | 41 | 42 | 43 | 44 | 45 | 46 | 47 | 48 |
| Composition | (A) | (a5) | 3 | | 3 | 3 | 3 | 3 | 3 | 3 |
| | | (a7) | | 3 | | | | | | |
| | (B) | (b1) | 0.2 | 0.2 | 0.4 | | | | | |
| | | (b2) | | | | 0.3 | | | | 0.2 |
| | | (b3) | | | | | 0.4 | | | |
| | | (b4) | | | | | | 0.3 | | |
| | | (b5) | | | | | | | 0.3 | |
| | | (b6) | | | | | | | | 0.3 |
| | | (b7) | | | | | | | | |
| | | (b8) | | | | | | | | |
| | | (b11) | | | | | | | | |
| | | (b12) | | | | | | | | |
| | | (b13) | | | | | | | | |
| | (C) | (c1) | | | | | | | | |
| | | (c3) | 3 | 3 | 3 | 3 | 3 | 3 | 3 | 3 |
| | | (c4) | 6 | 6 | 6 | 6 | 6 | 6 | 6 | 6 |
| | | (c5) | 15 | 15 | 15 | 15 | 15 | 15 | 15 | 15 |
| | (D) | (d1) | 16 | 16 | 16 | 16 | 16 | 16 | 16 | 16 |
| | | (d2) | 8 | 8 | 8 | 8 | 8 | 8 | 8 | 8 |
| | Filler | HAKUENKA CCR | 13 | 13 | 13 | 13 | 13 | 13 | 13 | 13 |
| | | WHITON B | 30 | 30 | 30 | 30 | 30 | 30 | 30 | 30 |
| | Diluent | ISOPER H | 3 | 3 | 3 | 3 | 3 | 3 | 3 | 3 |
| | Additives | QS30, QC-X | 2.8 | 2.8 | 2.6 | 2.7 | 2.8 | 2.7 | 2.7 | 2.7 |
| | Total | | 100 | 100 | 100 | 100 | 100.2 | 100 | 100 | 100 |

(continued)

| | | | Example | | | | | | | |
|---|---|---|---|---|---|---|---|---|---|---|
| | | | 41 | 42 | 43 | 44 | 45 | 46 | 47 | 48 |
| Properties | | | | | | | | | | |
| | 140°C for 20 minutes | Shear strength (MPa) | 2.5 | 2.5 | 2.5 | 2.3 | 2.5 | 2.4 | 2.3 | 2.3 |
| | | Fracture state | CF | CF | CF | CF | CF | CF | CF | CF |
| | | Tensile strength (MPa) | 1.6 | 1.6 | 1.7 | 1.6 | 1.6 | 1.6 | 1.5 | 1.5 |
| | | Elongation (%) | 155 | 155 | 160 | 150 | 160 | 155 | 140 | 140 |
| | 120°C for 20 minutes | Shear strength (MPa) | 1.4 | 1.2 | 1.4 | 1.1 | 1.5 | 1.1 | 1.3 | 1.3 |
| | | Fracture state | CF | CF/AF | CF | CF/AF | CF | CF/AF | CF | CF |
| | | Tensile strength (MPa) | 1.2 | 1.2 | 1.3 | 1.2 | 1.4 | 1.2 | 1.2 | 1.2 |
| | | Elongation (%) | 110 | 110 | 120 | 90 | 120 | 100 | 90 | 90 |
| | 40°C for 7 days | Viscosity change rate (%) | 28 | 28 | 32 | 30 | 28 | 30 | 30 | 30 |

[Table 6]

| | | | Example | | | | | Comparative Example | | |
|---|---|---|---|---|---|---|---|---|---|---|
| | | | 49 | 50 | 51 | 52 | 53 | 41 | 42 | 43 |
| Composition | (A) | (a5) | 3 | 3 | 8 | 8 | | 3 | 3 | 3 |
| | | (a7) | | | | | 4 | | | |
| | (B) | (b1) | | | | 2 | | | | |
| | | (b2) | | | | | | | | |
| | | (b3) | | | | | | | | |
| | | (b4) | | | | | | | | |
| | | (b5) | | | | | | | | |
| | | (b6) | | | | | | | | |
| | | (b7) | 0.3 | | | | | | | |
| | | (b8) | | 0.3 | 2 | | 1 | | | |
| | | (b11) | | | | | | 0.3 | | |
| | | (b12) | | | | | | | 0.3 | |
| | | (b13) | | | | | | | | 0.3 |
| | (C) | (c1) | | | | 14 | 14 | | | |
| | | (c3) | 3 | 3 | 3 | 3 | 3 | 3 | 3 | 3 |
| | | (c4) | 6 | 6 | 6 | 6 | 6 | 6 | 6 | 6 |
| | | (c5) | 15 | 15 | 15 | | | 14 | 14 | 14 |
| | (D) | (d1) | 16 | 16 | 16 | 16 | 16 | 16 | 16 | 16 |
| | | (d2) | 8 | 8 | 8 | 4 | 4 | 8 | 8 | 8 |
| | Filler | HAKUENKA CCR | 13 | 13 | 13 | 13 | 20 | 13 | 13 | 13 |
| | | WHITON B | 30 | 30 | 23 | 28 | 30 | 31 | 31 | 31 |
| | Diluent | ISOPER H | 3 | 3 | 3 | 3 | 5 | 3 | 3 | 3 |
| | Additives | QS30, QC-X | 2.7 | 2.7 | 3 | 3 | 3 | 2.7 | 2.7 | 2.7 |
| | Total | | 100 | 100 | 100 | 100 | 100 | 100 | 100 | 100 |
| Properties | | | | | | | | | | |
| | 140°C for 20 minutes | Shear strength (MPa) | 2.5 | 2.5 | 2.6 | 1.5 | 1.4 | 1.8 | 1.1 | 2.2 |
| | | Fracture state | CF | CF | CF | CF | CF | CF | AF | CF |
| | | Tensile strength (MPa) | 1.6 | 1.6 | 1.6 | 1.6 | 1.6 | 1.6 | 1.6 | 1.6 |
| | | Elongation (%) | 155 | 160 | 190 | 200 | 180 | 160 | 150 | 160 |
| | 120°C for 20 minutes | Shear strength (MPa) | 1.4 | 1.4 | 1.6 | 1.2 | 1.2 | 0.5 | 0.5 | 0.5 |
| | | Fracture state | CF | CF | CF | CF | CF | AF | AF | AF |
| | | Tensile strength (MPa) | 1.2 | 1.2 | 1.4 | 1.1 | 1.1 | 1.2 | 1.2 | 1.2 |
| | | Elongation (%) | 120 | 120 | 130 | 180 | 170 | 80 | 80 | 90 |
| | 40°C for 7 days | Viscosity change rate (%) | 28 | 28 | 35 | 30 | 30 | 28 | 28 | 25 |

In all of Examples 1 to 10 and 41 to 53, satisfactory curability and adhesion at 140 or 160°C were exhibited,

and the curability and adhesion were maintained even at 120°C

To the contrary, in all of Comparative Examples 1 and 2 and 41 to 43, satisfactory curability and adhesion can be exhibited at 140°C or 160°C, but the adhesion was insufficient at 120°C. The symbol "-" of the shear strength in Table 2 Comparative Examples 1 and 2 means that the strength could not be measured because of low strength (including uncuring).

It is considered that this is because the specific curing accelerator is not used in the Comparative Examples.

In all of Examples 21 to 33, satisfactory curability was exhibited at 100°C, and the curability was maintained even at 90°C.

To the contrary, in all of Comparative Examples 21 to 23, satisfactory curability and adhesion were exhibited at 100°C, but the adhesion could not be maintained particularly at 90°C, which was insufficient.

It is considered that this is because the specific curing accelerator was not used in the Comparative Examples.

In all of Examples 1 to 53, appropriate storage stability was exhibited.

[Industrial Applicability]

It has been found that, since the curable composition according to the embodiment of the present invention includes a specific curable component (A) and a specific latent curing agent (B), it is possible to further (preferably, commonly) exhibit low-temperature curability at a lower temperature of about 10 to 40°C, leading to appropriate usable time (pot life or storage stability). Further, the curable composition exhibiting low-temperature curability can exhibit cured physical properties and adhesion at a lower baking temperature (specifically, 90 to 120°C). Therefore, the curable composition according to the embodiment of the present invention can be suitably used for more efficiently manufacturing an automobile with lower energy.

[Related Application]

This application claims priority under Article 4 of the Paris Convention of the Japanese Patent Law on Japanese Patent Application No. 2019-123924 filed on July 2, 2019 in Japan, the disclosure of which is incorporated by reference herein.

## Claims

1. A low-temperature curable composition comprising:

    (A) at least one curable component selected from an epoxy resin and a blocked isocyanate, and
    (B) an amine-based latent curing agent, wherein
    a temperature peak of a reaction of the amine-based latent curing agent (B) with a bisphenol A type epoxy resin is between 70°C and 110°C.

2. The low-temperature curable composition according to claim 1, wherein the amine-based latent curing agent (B) has an average particle size of 0.1 to 20 μm and a melting point of 65 to 140°C, and comprises a bisphenol skeleton.

3. The low-temperature curable composition according to claim 1 or 2, wherein the amine-based latent curing agent (B) has at least one selected from a pyrazine ring, an adamantane ring and an indole ring.

4. The low-temperature curable composition according to any one of claims 1 to 3, wherein the component (A) is composed of one or more types, and at least one type thereof has a polyoxyalkylene structure.

5. The low-temperature curable composition according to any one of claims 1 to 4, wherein the blocked isocyanate of the component (A) comprises an aliphatic blocked isocyanate, and the blocking agent comprises an oxime-based blocking agent or an amine-based blocking agent.

6. The low-temperature curable composition according to any one of claims 1 to 4, wherein the blocked isocyanate of the component (A) comprises an aromatic blocked isocyanate, and the blocking agent comprises a phenol-based blocking agent.

7. The low-temperature curable composition according to any one of claims 1 to 6, comprising (C) at least one thermoplastic resin selected from a polyvinyl chloride-based homopolymer, a vinyl chloride-vinyl acetate-based copolymer and/or an acrylic resin.

**8.** The low-temperature curable composition according to any one of claims 1 to 7, comprising (D) a plasticizer.

## INTERNATIONAL SEARCH REPORT

International application No. PCT/JP2020/025343

**A. CLASSIFICATION OF SUBJECT MATTER**

C08G 59/50(2006.01)i; C08G 18/32(2006.01)i; C08G 18/80(2006.01)i
FI: C08G59/50; C08G18/32 053; C08G18/80

According to International Patent Classification (IPC) or to both national classification and IPC

**B. FIELDS SEARCHED**

Minimum documentation searched (classification system followed by classification symbols)
C08G59/50; C08G18/32; C08G18/80

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2019/039230 A1 (SUNSTAR ENGINEERING INC.) 28.02.2019 (2019-02-28) paragraphs [0001], [0023], [0028], [0031], [0033] | 1-8 |
| X | JP 2018-184525 A (SHIN-ETSU CHEMICAL CO., LTD.) 22.11.2018 (2018-11-22) paragraphs [0013]-[0019], [0023], [0025], [0029], [0039], [0040], [0052] | 1, 2, 4-8 |
| A | JP 2010-31140 A (SUNSTAR ENGINEERING INC.) 12.02.2010 (2010-02-12) | 1-8 |

☐ Further documents are listed in the continuation of Box C. ☒ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 07 September 2020 (07.09.2020) | 15 September 2020 (15.09.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/025343

| Patent Documents referred in the Report | Publication Date | Patent Family | Publication Date |
|---|---|---|---|
| WO 2019/039230 A1 | 28 Feb. 2019 | (Family: none) | |
| JP 2018-184525 A | 22 Nov. 2018 | (Family: none) | |
| JP 2010-31140 A | 12 Feb. 2010 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2013069368 A
- WO 2019039230 A
- JP 2014210900 A
- WO 01088011 A
- JP 2019123924 A